# FASCICULE DE BREVET EUROPEEN

(11) **EP 1 786 602 B1**
(45) Date de publication et mention de la délivrance du brevet: **16.07.2008**
(21) Numéro de dépôt: 05773027.7
(22) Date de dépôt: 30.05.2005
(51) Int. Cl.: B25J 17/02

(54) **ROBOT PARALLELE COMPRENANT DES MOYENS DE MISE EN MOUVEMENT D'UN ELEMENT MOBILE DECOMPOSES EN DEUX SOUS-ENSEMBLES**
PARALLELROBOTER MIT MITTELN, UM EIN IN ZWEI GETRENNTE UNTERBAUGRUPPEN UNTERTEILTES MOBILES ELEMENT IN BEWEGUNG ZU VERSETZEN
PARALLEL ROBOT COMPRISING MEANS FOR SETTING IN MOTION A MOBILE ELEMENT SPLIT IN TWO SEPARATE SUBASSEMBLIES

(30) Priorité: 22.07.2004 FR 0408151
(43) Date de publication de la demande: 23.05.2007
(73) Titulaire: INSTITUT NATIONAL DES SCIENCES APPLIQUEES DE RENNES, F-35043 Rennes Cedex (FR)
(72) Inventeur: ARAKELYAN, Vigen, F-35200 Rennes (FR); MAURINE, Patrick, F-35230 Orgeres (FR); BRIOT, Sébastien, F-35580 Pont-Rean (FR); PION, Emmanuel, F-29400 Saint-Sauveur (FR)
(74) Mandataire: Larcher, Dominique
(86) Numéro de dépôt international: PCT/FR2005/001326
(87) Numéro de publication internationale: WO 2006/021629

(56) Documents cités:
- WO-A-20/04076132
- US-A- 4 976 582
- US-A1- 2003 121 351

## Description

Le domaine de l'invention est celui des manipulateurs automatiques. Plus précisément, l'invention concerne un robot dit parallèle.

Les robots industriels sont classés par deux groupes principaux : robots sériels et robots parallèles.

La structure mobile des robots sériels est une chaîne ouverte formée d'une succession de segments reliés entre eux par des liaisons à un degré de liberté. Chaque articulation est commandée par un actionneur situé à l'endroit de l'articulation ou sur un des segments précédents. Dans ce dernier cas, un mécanisme assure la transmission entre l'actionneur et l'articulation considérée.

Une telle configuration implique une structure lourde car des masses importantes doivent être mises en mouvement, même dans le cas du déplacement d'une petite charge.

Les robots parallèles peuvent être définis comme étant des systèmes mécaniques à plusieurs degrés de liberté composés de deux corps rigides interconnectés par une ou plusieurs boucles formant un polygone plan.

Les robots parallèles présentent de multiples avantages par rapport aux robots sériels : des mouvements à hautes cadences et surtout des accélérations importantes, la répartition plus régulière des charges sur les actionneurs, une grande rigidité mécanique et peu de masse en mouvement qui améliore notablement la capacité dynamique du robot.

Parmi les inconvénients des robots parallèles on peut constater un volume de travail restreint imposé par la conception même du robot, la présence de singularités dans le volume de travail et un fort couplage entre le mouvement des différentes chaînes cinématiques. Le couplage de mouvements soulevait des difficultés à déterminer les modèles différentiels. Par exemple, l'incrément du moteur dépend de la position du robot, il va être plus petit au fur et à mesure que le robot va se rapprocher du centre, ce phénomène introduit une inertie variable qui est difficile à gérer en conservant des vitesses importantes de fonctionnement.

En vingt ans, les applications des robots parallèles se sont succédées : on peut trouver ces robots dans l'industrie agro-alimentaire, pharmaceutique, aéronautique, etc. Ils sont de plus en plus utilisés dans l'industrie pour la conception des nouvelles générations de machines outils.

La plupart des robots du type ci-dessus que l'on connaît, tels que par exemple le robot Delta (marque déposée) décrit dans le document de brevet publié sous le numéro US-4976582, comporte un élément de base et un élément mobile, ainsi que trois bras de commande montés de façon rigide à leur première extrémité sur trois axes qui peuvent être mis en rotation. L'autre extrémité de chaque bras de commande est rendue solidaire de l'élément mobile par l'intermédiaire de deux barres de liaison montées en articulation, d'une part, sur la seconde extrémité du bras de commande et, d'autre part, sur l'élément mobile.

Selon cette technique, l'inclinaison et l'orientation dans l'espace de l'élément mobile restent inchangés, quels que soient les mouvements des trois bras de commande.

L'élément mobile supporte un élément de travail dont la rotation est commandée par un moteur fixe situé sur l'élément de base. Un bras télescopique relie le moteur à l'élément de travail.

Un tel robot a quatre degrés de liberté. Il assure les trois mouvements de l'élément mobile et la rotation de l'élément de travail.

Un autre exemple de robot parallèle est décrit dans le document US-A-2003 121 351, dont la figure 4 montre trois bras de commande d'un élément mobile montés coulissants sur trois axes verticaux parallèles.

Toutefois, les robots parallèles sont mal adaptés pour le transfert précis des pièces lourdes car les commandes de l'élément mobile sont couplées.

Cela signifie que pour déplacer l'élément mobile selon une direction, il est nécessaire d'actionner tous les moteurs simultanément et de lier les commandes du robot.

En d'autres termes, il n'est pas possible pour un tel robot d'actionner un seul moteur pour déplacer l'élément mobile dans une seule direction. Il advient que le contrôle d'un tel système est difficile car il demande la synchronisation des commandes. Aussi, la représentation dynamique du robot relève d'un système d'équations différentielles couplées et non-linéaires. Il en résulte que les commandes n'intègrent pas les phénomènes non-linéaires liés à la dynamique du système et conduisent par conséquent à d'importantes difficultés de contrôle.

Un inconvénient majeur de ce type de robot réside donc dans la perte du niveau de précision au cours des déplacements des charges importantes conditionnée par l'inertie variable et le couplage des commandes.

L'invention a notamment pour objectif de pallier les inconvénients de l'art antérieur.

Plus précisément, l'invention a pour objectif de proposer un robot parallèle qui permette d'exécuter des déplacements selon une relation entrée/sortie linéaire.

L'invention a également pour objectif de fournir un tel robot qui soit adapté tant à l'exécution de mouvements relativement importants qu'à celle de microdéplacements.

L'invention a aussi pour objectif de fournir un tel robot qui permette la manipulation de charges importantes, y compris avec une grande précision.

Un autre objectif de l'invention est de fournir un tel robot qui évite la nécessité de synchroniser systématiquement les commandes comme c'est le cas avec l'art antérieur.

Un autre objectif de l'invention est de fournir un tel robot qui soit simple de conception et facile à mettre en oeuvre.

Ces objectifs, ainsi que d'autres qui apparaîtront par la suite, sont atteints grâce à l'invention qui a pour objet un robot du type comprenant un élément de base et un élément mobile couplé audit élément de base par des moyens de mise en mouvement, caractérisé en ce que lesdits moyens de mise en mouvement comprennent un premier et un deuxième sous-ensembles, ledit premier sous-ensemble étant destiné à déplacer ledit élément mobile selon une direction sensiblement verticale, ledit deuxième sous-ensemble reliant ledit premier sous-ensemble audit élément mobile et incluant au moins trois actionneurs susceptibles d'agir en parallèle pour déplacer ledit élément mobile dans un plan sensiblement horizontal indépendamment dudit premier sous-ensemble.

Un robot parallèle selon l'invention présente de multiples avantages.

Un des avantages principaux de ce robot est que les mouvements dans les plans horizontaux et selon l'axe vertical sont découplés, ceci grâce à la présence des premier et deuxième sous-ensembles.

En effet, le découplage des mouvements entraîne le découplage des puissances.

Or, on sait que, pour soulever une charge, il faut dépenser beaucoup d'énergie car la force de gravité a la même direction que le déplacement. Par contre pour déplacer la même charge dans le plan horizontal la dépense d'énergie est considérablement réduite car la force de gravité est perpendiculaire au déplacement. L'invention permet donc d'introduire dans la construction du robot des moteurs de capacité adaptée au déplacement considéré, par exemple un moteur puissant pour soulever une charge à une altitude donnée, et des moteurs moins puissants mais beaucoup plus précis pour les manipulations dans le plan horizontal.

On comprend donc que l'invention permet de créer des robots à grande capacité de charge exécutant des déplacements précis.

De plus, le découplage des mouvements simplifie la commande du robot dans la mesure où l'exécution du déplacement vertical permet une relation entrée - sortie linéaire.

En outre, comme cela va apparaître plus clairement par la suite, l'invention donne la possibilité de copier proportionnellement le mouvement vertical par un rapport de similitude, ce qui permet d'utiliser le robot selon l'invention pour la mise en oeuvre de systèmes micromécaniques (système à grande précision).

Par ailleurs, les trois actionneurs mécaniques sont constitués chacun, comme cela va apparaître plus clairement par la suite, par un système à chaîne cinématique plane et fermée agissant en parallèle de façon que l'élément mobile reste toujours parallèle à l'élément de base. Cette architecture assure une augmentation de la raideur de la mécanique d'ensemble qui est très favorable à l'obtention d'une meilleure précision du positionnement de l'élément mobile. Ainsi celui-ci ne peut présenter d'erreur d'inclinaison horizontale si les éléments constitutifs des chaînes cinématiques fermées sont géométriquement parfaits.

Un robot d'une telle conception est également avantageux en ce qu'il présente une architecture mécanique réalisable à faible coût, notamment en ce que cette architecture peut être composée d'éléments de construction standardisés.

Selon un premier mode de réalisation, ledit premier sous-ensemble comprend, pour chacun desdits actionneurs, un support, lesdits supports étant couplés à des premiers moyens moteurs communs à chacun desdits supports.

Le déplacement du robot selon un axe vertical est ainsi obtenu par un moteur unique, ce qui assure une grande simplicité du robot en termes de conception et évite la nécessité, pour ce déplacement, de synchroniser plusieurs moteurs.

Selon un deuxième mode de réalisation, ledit premier sous-ensemble comprend, pour chacun desdits actionneurs, un support couplé à des moyens moteurs qui lui sont propres.

Ainsi, on augmente le nombre de degré de liberté du manipulateur, en portant ce nombre à six.

Selon une solution avantageuse, lesdits premiers moyens moteurs sont portés par ledit élément de base.

De cette façon, ces moyens moteurs sont portés par un élément fixe et ne constituent pas une charge susceptible de nuire à la précision du robot, notamment lorsque celui-ci manipule les pièces légères.

On comprend donc que le robot ainsi conçu est adapté tant à la manipulation de charges importantes qu'à celle de petites pièces.

Avantageusement, chaque support est guidé en translation sur ledit élément de base.

Préférentiellement, lesdits moyens moteurs comprennent au moins un vérin hydraulique.

Un tel vérin assure au robot la capacité de transporter des charges relativement importantes, ceci sans nuire à sa précision, le vérin en lui-même n'étant pas une charge à déplacer.

Toutefois, d'autres systèmes cinématiquement équivalents pourront être mis en oeuvre dans d'autres modes de réalisation envisageables, par exemple des moteurs électriques linéaires.

Selon une solution préférée, le robot comprend, pour chaque actionneur, un support secondaire monté mobile en rotation sur ledit élément de base.

Selon une première variante, un moyen moteur secondaire peut être associé à chaque support secondaire pour entraîner celui-ci.

Selon une autre caractéristique, chaque actionneur comprend un ensemble de barres articulées entre elles de façon à former un pantographe.

De cette façon, on assure la relation entrée/sortie selon une fonction linéaire, cette fonction présentant un coefficient constant qui est le rapport de similitude du pantographe.

Une telle structure en pantographe procure un système de copiage des déplacements du premier sous-ensemble autorisant en sortie des déplacements importants ou des micro-déplacements.

Selon une solution avantageuse, lesdits supports secondaires présentent chacun des moyens de guidage en translation d'un élément porté par l'une desdites barres d'un desdits pantographes.

Dans ce cas, lesdits supports secondaires présentent chacun préférentiellement une glissière dans laquelle un galet porté par l'une desdites barres d'un desdits pantographes est susceptible de coulisser.

Selon une seconde variante, le dispositif comprend un moyen moteur secondaire associé à chaque moyen de guidage en translation (au lieu de moyens moteurs associés à chaque support secondaire tel qu'indiqué ci-dessus).

D'autres solutions pour le guidage en translation sur les supports peuvent être envisagées, par exemple en faisant coopérer une glissière avec un roulement à billes, ou en déplaçant un chariot sur un rail, etc...

De plus, le pantographe peut être remplacé par un autre système mécanique équivalent, permettant un copiage de mouvement.

Préférentiellement, ledit moyen moteur associé à chaque support secondaire comprend un moteur électrique.

De tels moteurs sont relativement peu puissants mais permettent l'exécution de mouvements avec une grande précision.

Le découplage des mouvements verticaux et horizontaux selon le principe de l'invention permet le recours à de tels moteurs dans la mesure où ceux-ci agissent par rapport à des charges déplacées horizontalement qui impliquent des dépenses d'énergie peu importantes par rapport aux dépenses d'énergie liées aux déplacements verticaux.

Bien entendu, d'autres actionneurs motorisés pourront être envisagés sans sortir du cadre de l'invention.

Ainsi, on évite la nécessité d'une synchronisation des commandes.

De plus, on peut gérer des actionneurs fonctionnant avec des sources d'énergie distinctes, ces moteurs ayant éventuellement des temps de réponse différents.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins parmi lesquels :
- la figure 1 est une vue en perspective d'un robot selon un premier mode de réalisation de l'invention ;
- la figure 2 est une représentation cinématique d'un robot selon le mode de réalisation illustré par la figure 1 ;
- la figure 3 est une représentation cinématique d'un robot selon un deuxième mode de réalisation de l'invention ;
- la figure 4 est une vue en perspective d'un robot selon un troisième mode de réalisation.

Tel que déjà mentionné précédemment, le principe de l'invention réside dans le fait de prévoir, dans un robot de type parallèle, un découplage des moyens assurant les déplacements verticaux de ceux assurant les déplacements horizontaux.

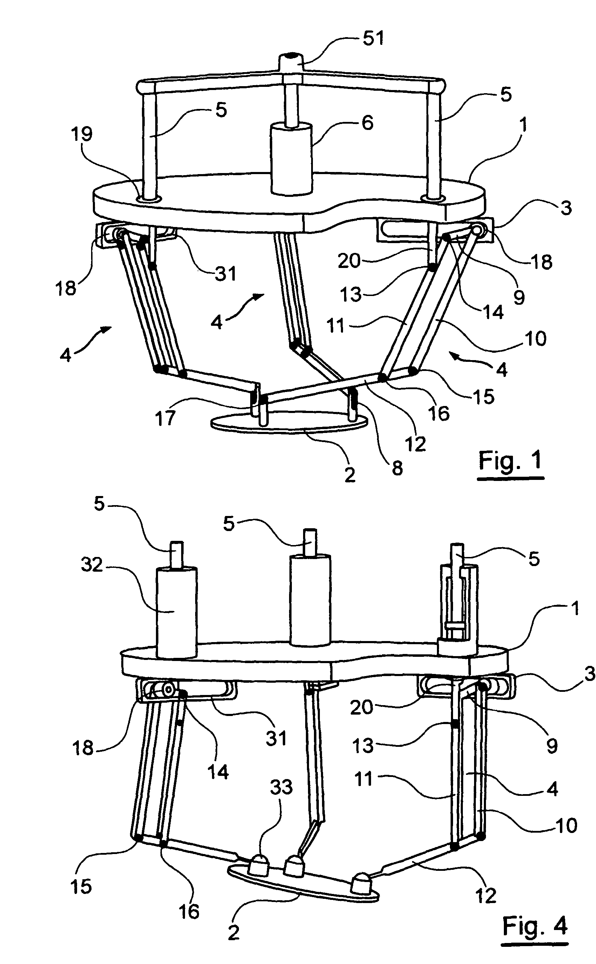

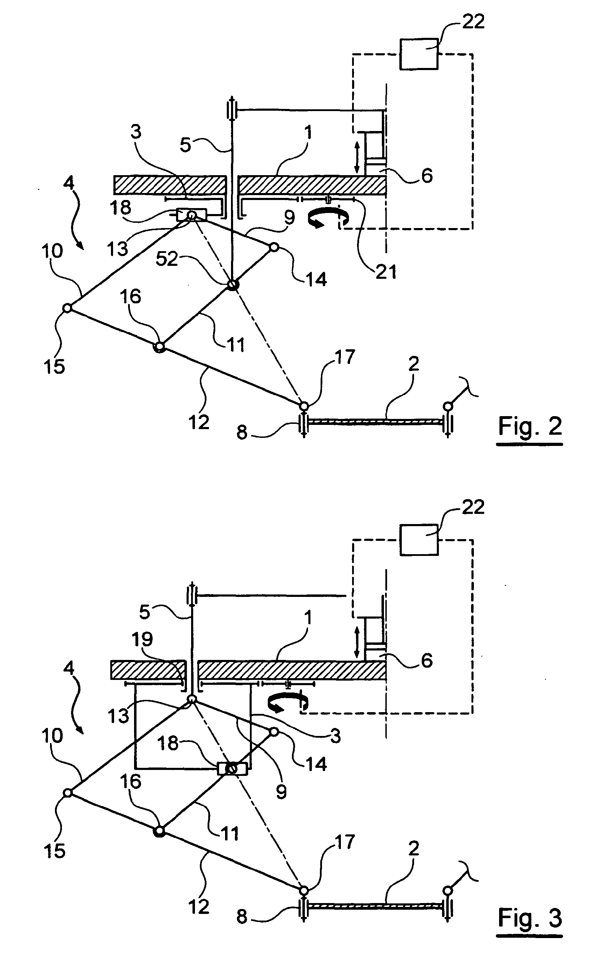

En référence aux figures 1 et 2 relatifs à un premier mode de réalisation de la présente invention, un robot parallèle comporte un élément de base 1, un élément mobile 2 relié à l'élément de base par des moyens de mise en mouvement constitués par des chaînes cinématiques détaillées ci-après.

Selon le principe de l'invention, ces moyens de mise en mouvement comprennent :
- un premier sous-ensemble 5, 6 destiné à déplacer l'élément mobile 2 verticalement ;
- un deuxième sous-ensemble reliant le premier sous-ensemble à l'élément mobile 2 et comprenant trois actionneurs 4 susceptibles d'agir en parallèle pour déplacer l'élément mobile 2 horizontalement, indépendamment du premier sous-ensemble.

Tel que cela apparaît sur la figure 1, le premier sous-ensemble comprend trois supports 5 s'étendant verticalement et reliés chacun à un actionneur 4 d'une part, et à un croisillon 51 couplé à des moyens moteurs électriques 6.(On notera que dans un autre mode de réalisation, ce moyens moteurs pourront inclure un vérin hydraulique.)

Comme il apparaît sur la figure 2, l'élément de base 1 porte trois modules rotatifs 21 destinés chacun à entraîner en rotation un support secondaire 3 monté sur l'élément de base 1 par une articulation 19. Ces modules rotatifs 21 incluent chacun un moteur électrique.

On note que chaque articulation 19 constitue à la fois une liaison pivot d'un support secondaire 3 par rapport à l'élément de base 1, et un moyen de guidage en translation verticale d'un support 5 sur l'élément de base 1.

Chaque support secondaire 3 est solidaire en rotation d'un actionneur mécanique 4 qui est monté par l'intermédiaire d'une liaison pivotante 52 sur le support 5 d'une part, et monté d'autre part par l'intermédiaire d'une articulation 8 sur l'élément mobile 2.

Tel qu'illustré par la figure 1, chaque actionneur mécanique 4 comprend un mécanisme de pantographe constitué de barres 9, 10, 11 et 12, liées entre elles par les articulations 13, 14, 16, 17.

Chaque actionneur 4 est rendu solidaire en rotation du support secondaire 3 correspondant par l'intermédiaire d'un galet 18, ce galet étant monté à coulissement dans une rainure 31 du support secondaire 3 (une telle liaison peut être réalisée aussi par une glissière avec un roulement à billes ou par une autre liaison de translation selon d'autres modes de réalisation envisageables).

Chaque galet 18 est monté à l'intersection des barres 9 et 10 de chaque mécanisme de pantographe, c'est à dire au niveau de l'articulation 13.

Les trois modules rotatifs 21 sont connectés par l'intermédiaire d'amplificateurs appropriés à une unité de pilotage 22 (un ordinateur ou un automate) destinée à contrôler les mouvements en rotation des actionneurs 4 dans le plan horizontal.

Cette unité de pilotage 22 est également connectée au moteur 6 pour commander celui-ci.

Ainsi, le mouvement vertical du moteur 6 entraîne le mouvement vertical du support 5 qui se traduit par le mouvement de l'articulation 13. Le mouvement vertical de l'articulation 13 provoque un mouvement vertical de l'articulation 17 par l'intermédiaire de l'actionneur mécanique 4.

Les actionneurs mécaniques réalisés sous forme de pantographes permettent une relation entre l'entrée 6 et la sortie 2 sous forme d'une fonction linéaire avec un coefficient constant qui est le rapport de similitude du pantographe.

Par ailleurs, les rotations des modules rotatifs 21 sont transformées en rotations des supports secondaires 3 qui se transforment à leur tour, par l'intermédiaire des actionneurs mécaniques 4, en mouvements de l'élément mobile 2 dans le plan horizontal.

On note que les trois degrés de liberté dans le plan horizontal se décomposent en deux translations de directions perpendiculaires dans le plan horizontal et en une rotation autour d'un axe vertical.

On comprend que le blocage du moteur 6 fixe l'altitude de l'élément mobile 2, ce qui permet de conserver l'élément mobile 2 dans un plan horizontal lors des rotations des actionneurs 4.

Un deuxième mode de réalisation schématisé à la figure 3 ne diffère du mode de réalisation décrit ci-dessus en référence aux figures 1 et 2 que par la position du support secondaire 3 et du galet 18 et par le point de fixation de l'extrémité inférieure du support 5.

Dans ce mode de réalisation, le support secondaire 3 et le galet 18 sont prévus sur la barre 11 tandis que l'extrémité inférieure du support 5 est montée pivotante sur l'articulation 13.

Un troisième mode de réalisation est représenté à la figure 4.

Selon ce troisième mode de réalisation, chacun des supports 5 est associé à un moteur 32 qui lui est propre. Par ailleurs, des rotules 33 sont prévues pour reliées les barres 12 des mécanisme de pantographe à l'élément mobile. Le robot manipulateur selon l'invention dispose ainsi de six degrés de liberté.

Les trois modes de réalisation de robot parallèle selon la présente invention décrits ci-dessus présentent trois bras montrant :
- une liaison rotoïde motorisée correspondant à la liaison entre la base 1 et le support 3 ;
- une liaison prismatique passive correspondant à la liaison glissière entre le galet 18 et le support secondaire 3 ;
- une liaison rotoïde passive par l'articulation 8 sur le l'élément mobile 2.

Toutefois, on notera que dans d'autres modes de réalisation, ce sont les liaison prismatiques qui pourront être motorisées et non les liaisons rotoïdes et ce, sans sortir du cadre de la présente invention.

Le robot selon l'invention peut être utilisé dans des domaines d'applications très variés, notamment celui de la robotique médicale dans lequel il est nécessaire de positionner des appareils avec une grande précision (imagerie médicale, générateurs de rayons, ustensiles chirurgicaux).

D'autres applications concernent de nouvelles machines, notamment des machine-outils à capacité de charge importante devant exécuter des mouvements très précis, surtout dans le plan horizontal et suivant l'axe vertical.

## Revendications

1. Robot du type comprenant un élément de base (1) et un élément mobile (2) couplé audit élément de base par des moyens de mise en mouvement,
**caractérisé en ce que** lesdits moyens de mise en mouvement comprennent un premier et un deuxième sous-ensembles, ledit premier sous-ensemble étant destiné à déplacer ledit élément mobile (2) selon une direction sensiblement verticale, ledit deuxième sous-ensemble reliant ledit premier sous-ensemble audit élément mobile (2) et incluant au moins trois actionneurs (4) susceptibles d'agir en parallèle pour déplacer ledit élément mobile (2) dans un plan sensiblement horizontal indépendamment dudit premier sous-ensemble.

2. Robot selon la revendication 1, **caractérisé en ce que** ledit premier sous-ensemble comprend, pour chacun desdits actionneurs (4), un support (5), lesdits supports (5) étant couplés à des premiers moyens moteurs (6) communs à chacun desdits supports (5).

3. Robot selon la revendication 1, **caractérisé en ce que** ledit premier sous-ensemble comprend, pour chacun desdits actionneurs (4), un support couplé à des premiers moyens moteurs (32) qui lui sont propres.

4. Robot selon l'une des revendications 2 ou 3, **caractérisé en ce que** lesdits premiers moyens moteurs (6, 32) sont portés par ledit élément de base (1).

5. Robot selon l'une des revendications 2 à 4 **caractérisé en ce que** lesdits moyens moteurs (6, 32) coopèrent avec des supports (5) reliés auxdits actionneurs et montés coulissant sur ledit élément de base (1).

6. Robot selon l'une quelconque des revendications 1 à 5, **caractérisé en ce qu'**il comprend, pour chaque actionneur (4), un support secondaire (3) monté mobile en rotation sur ledit élément de base (1).

7. Robot selon la revendication 6 **caractérisé en ce qu'**il comprend un moyen moteur secondaire (21) associé à chaque support secondaire (3) pour entraîner celui-ci.

8. Robot selon l'une quelconque des revendications 1 à 7, **caractérisé en ce que** chaque actionneur (4) comprend un ensemble de barres (9, 10, 11, 12) articulées entre elles de façon à former un pantographe.

9. Robot selon la revendication 8, **caractérisé en ce que** lesdits supports secondaires (3) présentent chacun des moyens de guidage en translation d'un élément porté par l'une desdites barres d'un desdits pantographes.

10. Robot selon la revendication 9, **caractérisé en ce que** lesdits supports secondaires (3) présentent chacun une glissière (31) dans laquelle un galet (18) porté par l'une desdites barres (11) d'un desdits pantographes est susceptible de coulisser.

11. Robot selon la revendication 9 ou 10 sauf lorsqu'elles dépendent de la revendication 7 **caractérisé en ce qu'**il comprend un moyen moteur secondaire associé à chaque moyen de guidage en translation.

## Claims

1. Robot of the type including a base element (1) and a mobile element (2) coupled to said base element by movement control means, **characterised in that** said movement control means comprise a first and a second sub-assembly, said first sub-assembly being designed to move said mobile element (2) along an approximately vertical direction, said second sub-assembly connecting said first sub-assembly to said mobile element (2) and including at least three actuators (4) capable of acting in parallel to move said mobile element (2) in an approximately horizontal plane independently of said first sub-assembly.

2. Robot set forth in claim 1, **characterised in that** said first sub-assembly includes a support (5) for each of said actuators (4), said supports (5) being coupled to first motor means (6) common to each of said supports (5).

3. Robot set forth in claim 1, **characterised in that** said first sub-assembly includes a support coupled to first motor means (32) specific to it, for each of said actuators (4).

4. Robot set forth in either claim 2 or 3, **characterised in that** said first motor means (6, 32), are carried by said base element (1).

5. Robot set forth in one of claims 2 to 4, **characterised in that** said motor means (6, 32), cooperate with supports (5) connected to said actuators and installed free to slide on said base element (1).

6. Robot set forth in any one of claims 1 to 5, **characterised in that** it includes a secondary support (3) mounted free to rotate on said base element (1), for each actuator (4).

7. Robot set forth in claim 6, **characterised in that** it includes a secondary motor means (21) associated with each secondary support (3) to drive this secondary support.

8. Robot set forth in one of claims 1 to 7, **characterised in that** each actuator (4) includes a set of bars (9, 10, 11, 12), articulated with each other so as to form a pantograph.

9. Robot set forth in claim 8, **characterised in that** each said secondary support (3) has a translational guide means of an element carried by one of said bars of one of said pantographs.

10. Robot set forth in claim 9, **characterised in that** each said secondary support (3) has a slide (31) in which a roller (18) carried by one of said bars (11) of one of said pantographs is free to slide.

11. Robot set forth in either claim 9 or 10, except when they depend on claim 7 **characterised in that** it includes a secondary motor means associated with each translational guide means.

## Patentansprüche

1. Roboter von der Art, die ein Basiselement (1) und ein mit dem besagten Basiselement gekoppeltes mobiles Element (2) aufweist, wobei diese Koppelung über Mittel erfolgt, mit denen dieses mobile Element in Bewegung versetzt wird,
**dadurch gekennzeichnet, dass** die besagten Mittel eine erste und eine zweite Unterbaugruppe umfassen, wobei die erste Unterbaugruppe das besagte mobile Element (2) in eine in etwa senkrechten Richtung bewegen soll und wobei die besagte zweite Unterbaugruppe die erste Unterbaugruppe mit dem besagten mobilen Element (2) verbindet und mindestens drei Betätigungsglieder (4) aufweist, die in der Lage sind, parallel zueinander zu wirken, um das besagte mobile Element (2) in einer in etwa horizontalen Ebene zu bewegen, wobei dies unabhängig von der ersten Unterbaugruppe erfolgt.

2. Roboter nach Anspruch 1, **dadurch gekennzeichnet, dass** die besagte erste Unterbaugruppe für jedes der besagten Betätigungsglieder (4) ein Stützelement (5) aufweist, wobei die besagten Stützelemente (5) mit ersten motorischen Mitteln (6) gekoppelt sind, welche jeweils einem jeden dieser Stützelemente (5) gemeinsam sind.

3. Roboter nach Anspruch 1, **dadurch gekennzeichnet, dass** die besagte erste Unterbaugruppe für jedes der besagten Betätigungsglieder (4) ein Stützelement aufweist, welches mit eigenen motorischen Mitteln (32) gekoppelt ist.

4. Roboter nach einem der Ansprüche 2 oder 3, **dadurch gekennzeichnet, dass** die besagten ersten motorischen Mittel (6, 32) vom besagten Basiselement (1) getragen werden.

5. Roboter nach einem der Ansprüche 2 bis 4, **dadurch gekennzeichnet, dass** die besagten motorischen Mittel (6, 32) mit Stützelementen (5) zusammenwirken, welche mit den besagten Betätigungsgliedern verbunden und gleitend auf dem besagten Basiselement (1) angebracht sind.

6. Roboter nach einem der Ansprüche 1 bis 5, **dadurch gekennzeichnet, dass** er für jedes Betätigungsglied (4) ein sekundäres Stützelement (3) aufweist, das drehbar auf dem besagten Basiselement (1) angebracht ist.

7. Roboter nach Anspruch 6, **dadurch gekennzeichnet, dass** er ein sekundäres motorisches Mittel (21) aufweist, das jedem sekundären Stützelement (3) zugeordnet ist und dieses antreibt.

8. Roboter nach einem der Ansprüche 1 bis 7, **dadurch gekennzeichnet, dass** jedes Betätigungslied (4) eine Gruppe von Stangen (9, 10, 11, 12) aufweist, welche derart untereinander gelenkig verbunden sind, dass sie einen Pantographen bilden.

9. Roboter nach Anspruch 8, **dadurch gekennzeichnet, dass** die besagten sekundären Stützelemente (3) jeweils Führungsmittel zum ermöglichen einer gleitenden Bewegung eines der Elemente aufweisen, die von einer der besagten Stangen eines der besagten Pantographen getragen werden.

10. Roboter nach Anspruch 9, **dadurch gekennzeichnet, dass** die besagten sekundären Stützelemente (3) jeweils eine Gleitschiene (31) aufweisen, in der eine von einer der besagten Stangen (11) eines der besagten Pantographen getragene Zapfenrolle (18) zu gleiten vermag.

11. Roboter nach einem der Ansprüche 9 oder 10, mit Ausnahme des Falles, in dem diese Ansprüche von Anspruch 7 abhängig sind, **dadurch gekennzeichnet, dass** er über ein sekundäres motorisches Mittel verfügt, das mit jedem der Führungsmittel für eine Verschiebebewegung zusammenhängt.
